# EUROPÄISCHE PATENTSCHRIFT

(11) **EP 1 443 312 B1**
(45) Veröffentlichungstag und Bekanntmachung des Hinweises auf die Patenterteilung: **21.11.2007**
(21) Anmeldenummer: 03002261.0
(22) Anmeldetag: 01.02.2003
(51) Int. Cl.: G01D 3/024, G01B 11/04, G01D 7/00

(54) **Verfahren zum Betreiben eines optischen Sensors**
Method of operating an optical sensor
Procédé d'exploitation d'un capteur optique

(43) Veröffentlichungstag der Anmeldung: 04.08.2004
(73) Patentinhaber: SICK AG, 79183 Waldkirch (DE)
(72) Erfinder: Schopp, Thomas, 79112 Freiburg (DE)
(74) Vertreter: Ludewigt, Christoph

(56) Entgegenhaltungen:
- EP-A- 0 447 580
- US-A- 5 850 370

## Beschreibung

Die Erfindung betrifft ein Verfahren zum Betreiben eines optischen Sensors zum Messen einer physikalischen Größe sowie einen entsprechenden Sensor.

Allgemein muss bei Messgeräten, mit denen ein physikalischer Parameter gemessen wird und die eine Eichzulassung haben, ein sogenannter Skalenwert definiert werden. Der Skalenwert entspricht der kleinsten angezeigten Masseinheit. Mit dem Skalenwert wird die Messgenauigkeit definiert. Die Messergebnisse dürfen nur in Vielfachen des Skalenwertes angegeben werden. Laut Definition dürfen Skalenwerte nur in Schritten von 1, 2 und 5 mal 10ⁿ (n ist ganzzahlig) gewählt werden. Die Definition ist durch nationale Behörden vorgegeben, in Deutschland beispielsweise durch die Physikalisch Technische Bundesanstalt, die sich nach den Empfehlungen der OIML (International Organization of Legal Metrology) richten.

Jedes geeichte Messgerät besitzt einen bestimmten dieser Skalenwerte und ist für Anwendungen, mit einer dem Skalenwert entsprechenden Messgenauigkeit geeignet.

Aus der US 5,850,370 ist ein optisches Paketvermessungssystem bekannt, bei dem bei der Längenmessung die Fördergeschwindigkeit in einem Microprozessor Berücksichtigung findet. In einer alternativen Ausführung ist nach diesem Dokument auch vorgesehen, den Sensor mit dem Förderband mitzubewegen.

Aus der EP 0 447 580 A1 ist eine Messvorrichtung bekannt, mit der an einer Anzeige verschiedene Skalenbilder und Dimensionen anzeigbar sind. Je nach dem, welche Messung in welcher Darstellung angezeigt werden soll, ist die Anzeige umschaltbar. Dabei läßt sich auch der anzuzeigende Messbereich wunschgemäß einstellen und gegebenenfalls umstellen. Die Messgenauigkeit der Messung ist von der Anzeige unabhängig.

Ein Problem tritt dann auf, wenn die Messgenauigkeit nicht konstant sein kann, weil sie von äußeren Bedingungen abhängt. Dies ist beispielsweise der Fall bei einer automatischen Längen- oder Volumenmessung von Fördergut auf einer Förderstrecke mittels eines optoelektronischen Sensors, beispielsweise eines Laserscanners. Denn bei stationärem Sensor ist die in Förderrichtung gemessene Länge von der Fördergeschwindigkeit abhängig. Bei Änderung der Fördergeschwindigkeit kann es unter Umständen notwendig werden einen anderen mit einem anderen Skalenwert geeichten Sensor einzusetzen. Die Messanordnung an der Förderstrecke hat somit entweder einen eingeschränkten Anwendungsbereich oder muss mehrere Sensoren mit anderen Skalenwerten aufweisen, was entsprechend aufwändig und kostenintensiv ist.

Ausgehend von diesem Stand der Technik ist es Aufgabe der Erfindung ein verbessertes Verfahren und einen verbesserten Sensor bereitzustellen, der vielseitiger einsetzbar ist und größere Messbereiche abdecken kann.

Bei dem erfindungsgemäßen Verfahren zum Messen einer physikalischen Größe mittels eines definierten und einer Eichzulassung unterliegenden Skalenwertes, wobei die Messgenauigkeit der zu messenden Größe von wenigstens einer äußeren Bedingung abhängig ist und je nach erreichbarer Messgenauigkeit ein bestimmter eichbarer Skalenwert zur Bestimmung der physikalischen Größe genommen wird, wird bei einer Änderung der äußeren Bedingung der eichbare Skalenwert entsprechend der erreichbaren Messgenauigkeit umgeschaltet.

Dadurch kann mit ein und demselben Sensor ein großer Messbereich erfasst werden. Der Einsatz verschiedener Sensoren für beispielsweise unterschiedliche Fördergeschwindigkeiten ist nicht mehr notwendig.

Da die beispielsweise an Förderstrecken zur Volumenmessung eingesetzten Sensoren einer Zulassung (Zertifizierung) bedürfen, müssen bei Einsatz des erfindungsgemäßen Verfahrens bzw. des erfindungsgemäßen Sensors nicht mehr mehrere Systeme für unterschiedliche Fördergeschwindigkeiten zugelassen werden. Die Zertifizierung eines Systems mit einem erfindungsgemäßen optoelektronischen Sensor, dessen Skalenwert umschaltbar ist, ist ausreichend.

Es sei darauf hingewiesen, dass die Fördergeschwindigkeit nur ein einfaches Beispiel von vielen denkbaren Parametern für die äußere Bedingung ist um die Vorteile einfacher darzustellen. Andere Systeme mit eichfähigen Größen sind denkbar.

So kann in einer Ausgestaltung der Erfindung die äußere Bedingung sich aus einer geometrischen Eigenschaft des Gegenstandes ableiten. Beispielsweise wenn auf einem Förderband in einem Flughafen o.dgl. nicht nur quaderförmige Koffer und Pakete, sondern auch Taschen mit im wesentlichen beliebiger Form volumenmäßig vermessen werden sollen. So können mit der Erfindung, also mit ein und demselben Sensor, sowohl die quaderförmigen Güter mit hoher Messgenauigkeit als auch die Taschen mit geringerer Messgenauigkeit vermessen werden. Dies ist bisher nur mit unterschiedlichen Vermessungssystemen möglich gewesen. Mit der Erfindung kann diese Aufgabe mit einem Sensor bzw. einem Sensorsystem erfüllt werden.

Die gleichen Vorteile ergeben sich, wenn man einerseits separierte, d.h. einzeln und mit Abstand zueinander vorliegende Güter, z.B. Gepäckstücke oder Pakete, mit hoher Messgenauigkeit vermessen möchte und andererseits die Güter mit geringerer Messgenauigkeit vermessen möchte, wenn die Güter berührend oder überlappend vorliegen. Die äußere Bedingung leitet sich dann aus der Lage des Gegenstandes ab. Die Lage der Gegenstände, also ob sie sich berühren, nebeneinanderliegen, gestapelt oder aufeinanderliegend vorliegen, kann ebenfalls von dem Sensor automatisch erfasst werden, wie dies beispielsweise in der älteren deutschen Anmeldung DE 102 26 663 beschrieben ist.

Alternativ kann es in bestimmten Anordnungen vorteilhaft sein die äußere Bedingung nicht automatisch sondern manuell in den Sensor einzugeben.

Wenn die äußere Bedingung inbesondere automatisch erfasst wird, ist es vorteilhaft, dass auch der Skalenwert in Abhängigkeit der äußeren Bedingung automatisch umgeschaltet wird, denn dann wird kein manueller Handgriff benötigt und die gesamte Vermessung kann automatisch mit der jeweils gewünschten Messgenauigkeit erfolgen.

Vorteilhafterweise wird in einer Ausgestaltung der Erfindung, wie bereits beispielhaft erwähnt, wenigstens ein die äußere Bedingung repräsentierender Parameter erfasst und der Skalenwert bei einer definierten Änderung des Parameters automatisch umgeschaltet. Der Parameter ist in einem bevorzugtem Einsatz der Erfindung die Fördergeschwindigkeit einer Förderstrecke und der Sensor misst wenigstens eine Länge von auf der Förderstrecke gefördertem Gut.

Ein erfindungsgemäßer optoelektronischer Sensor zum Messen der physikalischen Grösse weist Mitteln zum Erfassen der physikalischen Grösse in Maßeinheiten eines eichbaren Skalenwertes auf und ist gekennzeichnet durch Umschaltmittel zum Umschalten des Skalenwertes.

Vorteilhafterweise ist der Skalenwert automatisch umschaltbar, so dass kein manueller Eingriff, beispielsweise bei Änderung der Fördergeschwindigkeit oder bei unterschiedlichem Formen oder Lagen der zu vermessenden Gütern, notwendig ist. Es wird dann unabhängig von der äußeren Bedingung immer die richtige Größe mit der richtigen Messgenauigkeit gemessen.

Damit der Sensor selbsttätig und bevorzugt automatisch in den bereits oben beschriebenen Ausgestaltungen der Erfindung die äußere Bedingung aus einer geometrischen Eigenschaft des Gegenstandes oder aus der Lage des Gegenstandes ableiten kann, sind in Ausgestaltung des Sensors entsprechende Mittel vorgesehen. Diese Mittel sind insbesondere in der bereits erwähnten DE 102 26 663, auf die hiermit Bezug genommen wird, beschrieben und können aus elektronischen Komponenten und/oder mit zugehöriger Software bestehen.

Wenn die äussere Bedingung durch einen Parameter repräsentiert werden kann, sind vorteilhafterweise Mittel vorgesehen zur Erfassung dieses Parameters.

In einem einfachen Einsatzbeispiel ist dieser Parameter die Fördergeschwindigkeit einer Förderstrecke ist und der Sensor misst wenigstens eine Länge von auf der Förderstrecke gefördertem Gut.

Die Erfindung wird im Folgenden unter Bezugnahme auf die Zeichnung anhand von Ausführungsbeispielen im Einzelnen erläutert. In der Zeichnung zeigen:
- Fig. 1: eine Anordung zum Messen von geometrischen Abmessungen von auf einer Förderstrecke gefördertem Gut mit einem erfindungsgemäßen optoelektronischen Sensor;
- Fig. 2: ein Diagramm zur Veranschaulichung der Abhängigkeit eines Skalenwertes von einer Fördergeschwindigkeit der Förderstrecke;
- Fig. 3 bis 6: Möglichkeiten der Anordnung von auf der Förderstrecke geförderten Gütern in einer Draufsicht;
- Fig. 7 bis 9: weitere Möglichkeiten der Anordnung von auf der Förderstrecke geförderten Gütern in einer Seitenansicht.

Ein erfindungsgemäßer optoelektronischer Sensor 10 ist oberhalb einer Förderstecke 12 angeordnet, auf der Fördergut, beispielsweise Pakete 14, in beliebige Richtung 16 gefördert werden. Die Pakete 14 werden von dem Sensor 10 während des Transportes automatisch zur Volumen bestimmung vermessen. Die Messergebnisse können an einer Anzeigeeinheit 18 angezeigt und/oder zur Weiterverarbeitung an einen geeigneten Signalausgang ausgegeben werden.

Der optoelektronische Sensor 10 kann ein Laserscanner sein, wie er beispielsweise von der Anmelderin unter der Bezeichnung LMS 200 vertrieben wird, der mittels eines Laserstrahls 24 das Paket 14 in bekannter Weise abtastet. Aus den Winkel- und Abstandsinformationen der Laserstrahlreflexe kann letztlich das Volumen bestimmt werden.

Bei der Volumenbestimmung eines quaderförmigen Paketes 14 müssen Höhe h, Breite und Länge L bestimmt werden. Die Genauigkeit der Längenmessung in Förderrichtung 16 ist, wie eingangs beschrieben, von der Fördergeschwindigkeit fg abhängig. Da die Messgeräte zur Volumenbestimmung einer Eichzulassung, z.B. dem deutschen Eichgesetz oder der Canadian Weight and Measurement, unterliegen, ist ein oben erläuterter Skalenwert definiert.

Weiter ist ein Mittel 20 zur Erfassung der Fördergeschwindigkeit vorgesehen, so dass ein der Fördergeschwindigkeit fg entsprechendes Signal dem Sensor 10 oder einer dem Sensor zugeordneten Auswerteeinheit über eine Leitung 26 zugeführt werden kann. Das Mittel 20 kann ein separates Teil der Messanordung oder auch Teil des Sensors 10 sein. Desweiteren ist ein Umschaltmittel 22 vorgesehen mit dem der Skalenwert umgeschaltet werden kann und zwar in Abhängigkeit von der Fördergeschwindigkeit fg.

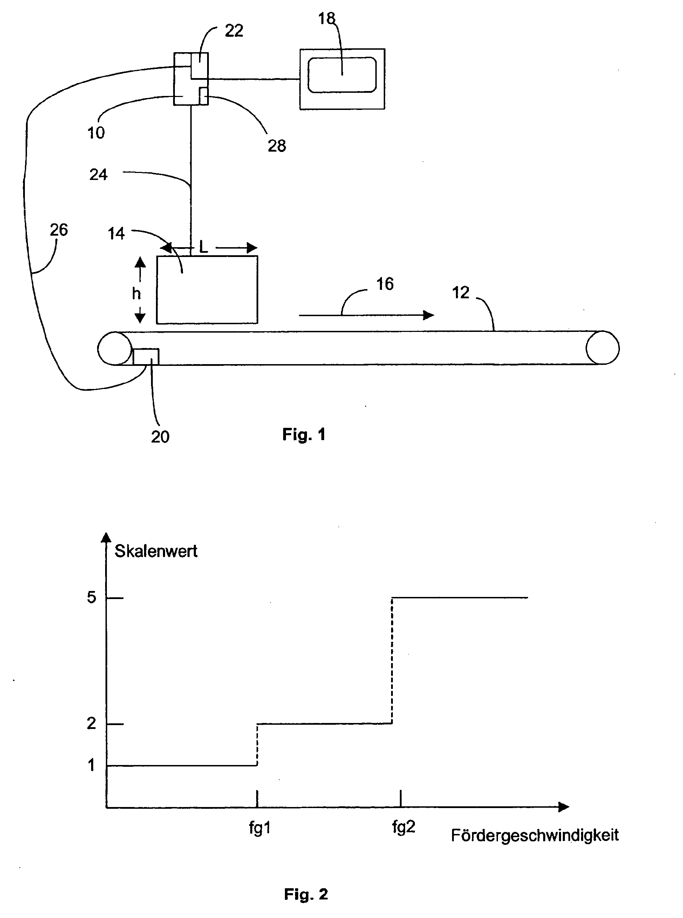

Eine Abhängigkeit des Skalenwertes von der Fördergeschwindigkeit fg ist beispielsweise in Fig. 2 dargestellt. Unterhalb einer Fördergeschwindigkeit fg1 ist ein Skalenwert von 1 eingestellt. Bei einer Fördergeschwindigkeit größer fg1 und kleiner fg2 beträgt der Skalenwert 2 und bei einer Fördergeschwindigkeit größer fg2 wird ein Skalenwert von 5 eingestellt. Dabei erfolgt das Umschalten der Skalenwerte automatisch, so dass unabhängig von der Fördergeschwindigkeit fg immer mit dem richtigen Skalenwert die Länge L und letztendlich das Volumen mit der notwendigen Messgenauigkeit bestimmt wird.

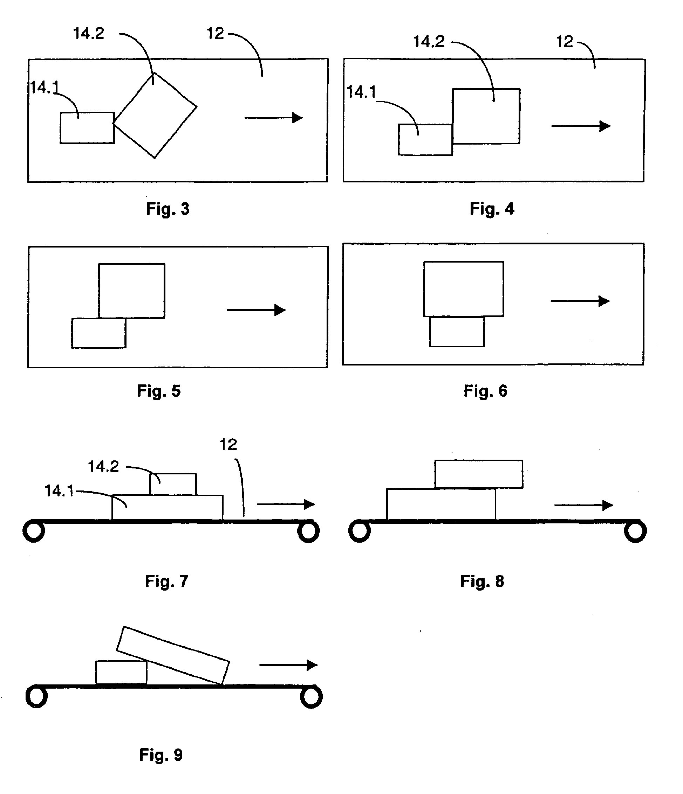

In weiteren Ausführungsbeispielen der Erfindung kann die äußere Bedingung aus anderen Gegebenheiten abgeleitet werden, wie dies anhand der Fig. 3 bis 6 und 7 bis 9 im Folgenden erläutert werden soll.

Wenn beispielsweise die auf der Förderstrecke 12 geförderten Pakete 14.1 und 14.2 ihrem Volumen nach vermessen werden sollen, so ist dies problemlos immer mit der gleichen Messgenauigkeit möglich, wenn die Pakete separat und mit Abstand zueinander, also einzeln, befördert werden. In der Realität liegen Pakete aber häufig sich berührend aneinander, wie dies in den Fig. 3 bis 6 beispielhaft gezeigt ist. In der Fachsprache liegen die Pakete 14.1 und 14.2 aus Fig. 3 und 4 "touching" und die aus Fig. 5 und 6 "side by side". Die Pakete können auch übereinander liegen, wie in den weiteren Fig. 7 bis 8 gezeigt, wobei die Anordnungen nach Fig. 7 und 8 als "stacked" und die nach Fig.9 als "leaning" bezeichnet werden.

Wenn eine dieser Situation vorliegt, kann der Sensor die einzelnen Pakete 14.1 und 14.2 nur schwer erkennen und entsprechend schlecht vermessen. In der eingangs erwähnten deutschen Patentanmeldung DE 102 26 663 wird ein Verfahren beschrieben, um auch in diesen Situationen einzelne Pakete zu erkennen und separat zu vermessen. Die Vermessung kann dann allerdings nicht mit einer solch hohen Messgenauigkeit vorgenommen werden, wie dies bei vereinzelt vorliegenden Paketen der Fall wäre.

Deshalb wird bei Vorliegen einer dieser Situationen, also einer dieser äußeren Bedingungen "touching", "stacked", etc., erfindungsgemäß der Skalenwert in Abhängigkeit der äußeren Bedingung umgeschaltet.

Dabei ist es denkbar, dass beispielsweise der "touching" Situation ein anderer Skalenwert als der "stacked" Situation und dieser wieder ein anderer als der "leaning" Situation zugeordnet wird.

Desweiteren kann die äußere Bedingung aus der Form der geförderten Güter abgeleitet sein. So können beispielsweise quaderförmige Koffer mit höherer Messgenauigkeit vermessen werden als Taschen mit unregelmäßiger äußerer Form, so daß erfindungsgemäß abhängig von der äußeren Form des Gutes der Skalenwert eingestellt wird.

Da der erfindungsgemäße Sensor Mittel 28 aufweist, mit denen die äußere Bedingung erkannt werden kann, kann der Sensor 10 selbsttätig auf eine jeweils gewünschte Messgenauigkeit eingestellt werden, also beim zertifizierten System der entsprechenden Skalenwert eingestellt werden. Die Mittel 28 zum Erkennen der äußeren Bedingung sind im Einzelnen in der erwähnten älteren Anmeldung DE 102 26 663 beschrieben und umfassen u.a. die Erkennung der Lage und/oder Form des geförderten Gutes. Wesentlicher Inhalt dieser Mittel 28 zum Erkennen ist eine intelligente Software, mit der die Reflexe des Lichtabtaststrahls ausgewertet werden können.

## Patentansprüche

1. Verfahren zum Betreiben eines optischen Sensors (10) zum Messen einer physikalischen Größe (L) eines Gegenstandes mittels eines definierten und einer Eichzulassung unterliegenden Skalenwertes, wobei die erreichbare Messgenauigkeit der zu messenden Größe (L) von wenigstens einer äußeren Bedingung abhängig ist, **dadurch gekennzeichnet, dass** je nach erreichbarer Messgenauigkeit ein bestimmter eichbarer Skalenwert zur Bestimmung der physikalischen Größe genommen wird, wobei bei einer Änderung der äußeren Bedingung der eichbare Skalenwert entsprechend der erreichbaren Messgenauigkeit umgeschaltet wird.

2. Verfahren nach Anspruch 1, **dadurch gekennzeichnet, dass** die äußere Bedingung sich aus einer geometrischen Eigenschaft des Gegenstandes (14) ableitet.

3. Verfahren nach einem der vorhergehenden Ansprüche, **dadurch gekennzeichnet, dass** die äußere Bedingung sich aus der Lage des Gegenstandes (14.1, 14.2) ableitet.

4. Verfahren nach einem der vorhergehenden Ansprüche, **dadurch gekennzeichnet, dass** die äußere Bedingung manuell in den Sensor (10) eingegeben wird.

5. Verfahren nach einem der vorhergehenden Ansprüche, **dadurch gekennzeichnet, dass** die äußere Bedingung durch den Sensor (10) erkannt wird.

6. Verfahren nach einem der vorhergehenden Ansprüche, **dadurch gekennzeichnet, dass** der Skalenwert in Abhängigkeit der äußeren Bedingung automatisch umgeschaltet wird.

7. Verfahren nach Anspruch 1, **dadurch gekennzeichnet, dass** wenigstens ein die äußere Bedingung repräsentierender Parameter (fg) erfasst wird und der Skalenwert bei einer definierten Änderung des Parameters (fg) automatisch umgeschaltet wird.

8. Verfahren nach Anspruch 6, **dadurch gekennzeichnet, dass** der Parameter die Fördergeschwindigkeit (fg) einer Förderstrecke (12) ist und der Sensor (10) wenigstens eine Länge (L) von auf der Förderstrecke (12) gefördertem Gut (14) misst.

9. Optoelektronischer Sensor (10) zum Messen einer physikalischen Grösse (L) mit Mitteln zum Erfassen der physikalischen Grösse (L) in Maßeinheiten eines eichbaren Skalenwertes, **dadurch gekennzeichnet, dass** ein Umschaltmitel (22) vorgesehen ist zum Umschalten des eichbaren Skalenwertes in Abhängigkeit einer Änderung einer die erreichbare Messgenauigkeit beeinflussenden äußeren Bedingung.

10. Sensor nach Anspruch 9, **dadurch gekennzeichnet, dass** der Skalenwert automatisch umschaltbar ist.

11. Sensor nach einem der vorhergehenden Ansprüche 9 oder 10, **dadurch gekennzeichnet, dass** Mittel (28) vorgesehen sind zum Ableiten der äußeren Bedingung aus einer geometrischen Eigenschaft des Gegenstandes.

12. Sensor nach einem der vorhergehenden Ansprüche 9 bis 11, **dadurch gekennzeichnet, dass** Mittel (28) vorgesehen sind zum Ableiten der äußeren Bedingung aus der Lage des Gegenstandes.

13. Sensor nach einem der vorhergehenden Ansprüche 9 bis 12, **dadurch gekennzeichnet, dass** Mittel vorgesehen sind zum manuellen Eingeben der äußeren Bedingung in den Sensor.

14. Sensor nach einem der vorhergehenden Ansprüche 9 bs 12, **dadurch gekennzeichnet, dass** Mittel (28) vorgesehen sind zum automatischen Erkennen der äußeren Bedingung durch den Sensor.

15. Sensor nach einem der vorhergehenden Ansprüche 9 oder 10, **dadurch gekennzeichnet, dass** Mittel (20) vorgesehen sind zum Erfassen wenigstens eines die äussere Bedingung repräsentierenden Parameters (fg).

16. Sensor nach Anspruch 15, **dadurch gekennzeichnet, dass** der Parameter die Fördergeschwindigkeit (fg) einer Förderstrecke (12) ist und der Sensor (10) wenigstens eine Länge (L) von auf der Förderstrecke (12) gefördertem Gut (14) misst.

## Claims

1. Method for operating an optical sensor (10) for measuring a physical variable (L) of an object by means of a defined scale value which is subject to calibration certification, with the achievable measurement accuracy of the variable (L) to be measured being dependent on at least one external condition, **characterized in that** a specific calibrateable scale value is used to determine the physical variable dependent on the achievable measurement accuracy, with the calibrateable scale value being switched, depending on the achievable measurement accuracy, in the event of a change in the external condition.

2. Method according to Claim 1, **characterized in that** the external condition is derived from a geometric characteristic of the object (14).

3. Method according to one of the preceding claims, **characterized in that** the external condition is derived from the orientation of the object (14.1, 14.2)

4. Method according to one of the preceding claims, **characterized in that** the external condition is entered in the sensor (10) manually.

5. Method according to one of the preceding claims, **characterized in that** the external condition is identified by the sensor (10).

6. Method according to one of the preceding claims, **characterized in that** the scale value is switched automatically as a function of the external condition.

7. Method according to Claim 1, **characterized in that** at least one parameter (fg) which represents the external condition is detected, and the scale value is switched automatically in the event of a defined change in the parameter (fg).

8. Method according to Claim 6, **characterized in that** the parameter is the feed rate (fg) of a conveyor track (12) and the sensor (10) measures at least one length (L) of an item (14) being conveyed on the conveyor track (12).

9. Optoelectronic sensor (10) for measuring a physical variable (L) having means for detecting the physical variable (L) in dimensional units of a calibrateable scale value, **characterized in that** a switching means (22) is provided for switching the calibrated scale value as a function of a change in an external condition which influences the achievable measurement accuracy.

10. Sensor according to Claim 9, **characterized in that** the scale value is automatically switchable.

11. Sensor according to one of the preceding Claims 9 or 10, **characterized in that** means (28) are provided for deriving the external condition from a geometric characteristic of the object.

12. Sensor according to one of the preceding Claims 9 to 11, **characterized in that** means (28) are provided for deriving the external condition from the orientation of the object.

13. Sensor according to one of the preceding Claims 9 to 12, **characterized in that** means (28) are provided for manually entering the external condition in the sensor.

14. Sensor according to one of the preceding Claims 9 to 12, **characterized in that** means (28) are provided for automatic identification of the external condition by the sensor.

15. Sensor according to one of the preceding Claims 9 or 10, **characterized in that** means (20) are provided for detecting at least one parameter (fg) which represents the external condition.

16. Sensor according to Claim 15, **characterized in that** the parameter is the feed rate (fg) of a conveyor track (12), and the sensor (10) measures at least one length (L) of an item (14) being conveyed on the conveyor track (12).

## Revendications

1. Procédé destiné à exploiter un capteur (10) optique pour mesurer une grandeur (L) physique d'un objet au moyen d'une valeur d'échelle graduée définie et soumise à un agrément d'étalonnage, la pression de mesure pouvant être obtenue de la grandeur (L) à mesurer étant dépendante d'au moins une condition extérieure, **caractérisé en ce qu'**une valeur d'échelle graduée définie et étalonnable est prise pour déterminer la grandeur physique en fonction de la pression de mesure pouvant être obtenue, la valeur d'échelle graduée étalonnable étant convertie en fonction de la précision de mesure pouvant être obtenue dans le cas d'une variation de la condition extérieure.

2. Procédé selon la revendication 1 **caractérisé en ce que** la condition extérieure se déduit d'une propriété géométrique de l'objet (14).

3. Procédé selon l'une quelconque des revendications dépendantes, **caractérisé en ce que** la condition extérieure se déduit de la position de l'objet (14.1, 14.2).

4. Procédé selon l'une quelconque des revendications précédentes, **caractérisé en ce que** la condition extérieure est entrée manuellement dans le capteur (10).

5. Procédé selon l'une quelconque des revendications précédentes, **caractérisé en ce que** la condition extérieure est détectée par le capteur (10).

6. Procédé selon l'une quelconque des revendications précédentes, **caractérisé en ce que** la valeur d'échelle graduée est convertie automatiquement en fonction de la condition extérieure.

7. Procédé selon la revendication 1, **caractérisé en ce qu'**au moins un paramètre (fg) représentant la condition extérieure est détecté et la valeur d'échelle graduée est convertie automatiquement dans le cas d'une variation définie du paramètre (fg).

8. Procédé selon la revendication 6, **caractérisé en ce que** le paramètre mesure la vitesse de transport (fg) d'un tronçon de transport (12) et le capteur (10) mesure au moins une longueur (L) de l'objet (14) transporté sur le tronçon de transport (12).

9. Capteur (10) optoélectronique destiné à mesurer une grandeur physique (L) avec les moyens pour l'enregistrement de la grandeur (L) physique en unités de mesure d'une valeur d'échelle graduée étalonnable, **caractérisé en ce qu'**un moyen de conversion (22) est prévu pour la conversion de la valeur d'échelle graduée étalonnable en fonction d'une variation d'une condition extérieure qui influence la précision de mesure pouvant être obtenue.

10. Capteur selon la revendication 9, **caractérisé en ce que** la valeur d'échelle graduée peut être convertie automatiquement.

11. Capteur selon l'une quelconque des revendications 9 ou 10 précédentes, **caractérisé en ce que** des moyens sont prévus pour déduire la condition extérieure d'une propriété géométrique de l'objet.

12. Capteur selon l'une quelconque des revendications précédentes 9 à 11, **caractérisé en ce que** des moyens (28) sont prévus pour déduire la condition extérieure de la position de l'objet.

13. Capteur selon l'une quelconque des revendications précédentes 9 à 12, **caractérisé en ce que** des moyens sont prévus pour entrer manuellement la condition extérieure dans le capteur.

14. Capteur selon l'une quelconque des revendications précédentes 9 à 12, **caractérisé en ce que** des moyens (28) sont prévus pour la détection automatique de la condition extérieure par le capteur.

15. Capteur selon l'une quelconque des revendications précédentes 9 ou 10, **caractérisé en ce que** des moyens (20) sont prévus pour l'enregistrement d'au moins un paramètre (fg) représentant la condition extérieure.

16. Capteur selon la revendication 15, **caractérisé en ce que** le paramètre est la vitesse de transport (fg) d'un tronçon de transport (12) et le capteur (10) mesure au moins une longueur (L) de l'objet (14) transporté sur le tronçon de transport (12).
